(19) **Europäisches Patentamt**
**European Patent Office**
**Office européen des brevets**

(11) Veröffentlichungsnummer : **0 558 691 B1**

(12) **EUROPÄISCHE PATENTSCHRIFT**

(45) Veröffentlichungstag der Patentschrift :
**30.11.94 Patentblatt 94/48**

(21) Anmeldenummer : **92905567.1**

(22) Anmeldetag : **28.02.92**

(86) Internationale Anmeldenummer :
**PCT/EP92/00433**

(87) Internationale Veröffentlichungsnummer :
**WO 92/15995 17.09.92 Gazette 92/24**

(51) Int. Cl.⁵ : **H01F 1/00,** H01F 1/053,
G11B 5/706, G11B 5/64,
H02K 1/02, H05K 9/00

(54) **EINE NEUE KATEGORIE MAGNETISCHER MATERIALIEN, DEREN HERSTELLUNG UND ANWENDUNG.**

(30) Priorität : **08.03.91 DE 4107499**
**22.06.91 DE 4120663**
**18.12.91 DE 4141763**

(43) Veröffentlichungstag der Anmeldung :
**08.09.93 Patentblatt 93/36**

(45) Bekanntmachung des Hinweises auf die
Patenterteilung :
**30.11.94 Patentblatt 94/48**

(84) Benannte Vertragsstaaten :
**AT CH DE FR GB IT LI NL SE**

(56) Entgegenhaltungen :
**DIGESTS OF INTERMAG, 90 April 1990, Brighton GB, pages 15-16, D. Eckert et al.: "Temperature dependence of the coercive force in Nd4 Fe77 B19"**
**E.P. Wolfarth et al.: "Ferromagnetic Materials Volume 4", 1988, North Holland NL, Amsterdam NL, page 73**
**IEEE TRANSACTIONS ON MAGNETICS, volume 26, No. 5, September 1990, New York US, W.Y. Jeung et al.: "The effects of the Alpha-Fe precipitation on the coercive force of the rapidly quenched Pr-Fe-Zr alloys"**

(73) Patentinhaber : **BASF Aktiengesellschaft**
**Carl-Bosch-Strasse 38**
**D-67063 Ludwigshafen (DE)**

(72) Erfinder : **RICHTER, Hans, Juergen**
**Einlaubstrasse 54**
**D-6731 St. Martin (DE)**
Erfinder : **SCHWAB, Ekkehard**
**Berwartsteinstrasse 4**
**D-6730 Neustadt (DE)**
Erfinder : **JAKUSCH, Helmut**
**Lorscher Ring 6c**
**D-6710 Frankenthal (DE)**
Erfinder : **HIBST, Hartmut**
**Branichstrasse 23**
**D-6905 Schriesheim (DE)**
Erfinder : **GRAU, Werner**
**An der Tuchbleiche 5**
**D-6712 Bobenheim-Roxheim (DE)**
Erfinder : **KNELLER, Eckhart**
**Vossegge 23**
**D-5810 Witten 3 (DE)**
Erfinder : **HAWIG, Reinhardt**
**Cranger Strasse 296**
**D-4650 Gelsenkirchen (DE)**

## Beschreibung

Die Erfindung betrifft ein magnetisierbares Material, das aus wenigstens zwei ferro- und/oder ferrimagnetischen Phasen besteht, welche durch magnetische Austauschkopplung untereinander magnetisch gekoppelt sind, wobei mindestens eine der Phasen hartmagnetisch und mindestens eine der Phasen weichmagnetisch ist, wobei der Volumenanteil der weichmagnetischen Phase mindestens 30 % ist, wobei die Orientierung der hartmagnetischen Phase statistisch in Bezug auf die Hauptrichtungen der weichmagnetischen Phase verteilt ist und wobei das magnetische Material ein isotropes Verhältnis von Sättigungsremanenz zu Sättigungsmagnetisierung von größer als 0,6 besitzt.

Aus der DE 23 44 644 ist ein magnetisierbares Material mit Austauschanisotropie bekannt, bestehend aus einem Ferri- oder Ferromagnetikum mit einem daran gekoppelten Antiferromagnetikum. Dieses Material ist dadurch charakterisiert, daß unterhalb einer gegebenen Temperatur, die kleiner als die Néel-Temperatur des Antiferromagnetikums ist, das zur irreversiblen Drehung der Magnetisierung im antiferromagnetischen Material aufzuwendende kritische Magnetfeld und außerdem das Magnetfeld zur Erzeugung jeder Magnetisierungsstruktur, die zur irreversiblen Drehung der Magnetisierung im Antiferromagnetikum führt, stärker sind als das stärkste technisch zu realisierende Aufzeichnungsmagnetfeld. Dadurch verschwinden alle Magnetisierungsstrukturen in Magnetfeldern, die kleiner oder gleich sind wie die durch das stärkste Magnetfeld erzeugten nach Abschalten des erzeugenden Magnetfeldes ganz oder teilweise wieder, derart, daß zuvor bei einer Temperatur oberhalb dieser Temperatur fixierte Signale entweder von sich selbst ganz oder teilweise regenerieren oder restauriert werden können. Damit können auf einem magnetischen Aufzeichnungsträger Aufzeichnungen gemacht werden, die gegen nachträgliche unbemerkte Veränderungen geschützt sind.

Ein Material der oben genannten gattungsmäßigen Art ist aus Digest of Intermag '90, April 1990, Brighton GB, Seiten 15 und 16, D. Eckert et al., "Temperature Dependence of the Coercive Force in $Nd_4Fe_{77}B_{19}$" bekannt. Darin ist ein durch Abschrecken aus der Schmelze herstellbares magnetisierbares Material beschrieben, dessen weichmagnetische Phase aus $Fe_3B$ (orthorhombisch) und dessen hartmagnetische Phase aus $Nd_2Fe_{14}B$ besteht und das ein Maximum der Koerzitivfeldstärke bei niederen Temperaturen und einen geringeren Temperaturkoeffizienten der Koerzitivfeldstärke aufweist als das durch Sintern gewonnene Material.

Die Beeinflussung der Koerzitivfeldstärke durch das Quenchen von Legierungsschmelzen wurde von W.Y. Jeung et al. (IEEE Transactions on Magnetics, 26 (1990) September, No. 5, Seiten 1733 bis 1735) an Pr-Fe-B-Zr-Legierungen untersucht und auf die dabei entstehende $\alpha$-Fe-Phase zurückgeführt.

Die EP-A 0 406 004 beschreibt ein magnetisches Legierungs-Material der Zusammensetzung $(Fe_{1-a-b}M_aM'_b)Si_xB_y$, in welchem M Ni und/oder Co bedeutet, in welchem durch selektive lokale Erhitzung eine Anisotropie induziert ist und welches eine kristalline oder amorphe Struktur besitzt, wobei die Dimensionen der weich- beziehungsweise hartmagnetischen Phasen im Bereich von 1 μm bis 1 mm liegen.

Die vorliegende Erfindung bezieht sich auf ein andersartiges Prinzip der Austauschkopplung und auf ein entsprechend aufgebautes ferromagnetisches Material, nämlich auf eine Art von Austauschfeder-Mechanismus. Bei diesem werden zwei ferromagnetische Phasen, eine magnetisch harte und eine magnetisch weiche, miteinander kombiniert, wobei das Material eine gegenüber bekannten Materialien äußerst feine Mikrostruktur aufweist.

Magnetisch harte Materialien haben im allgemeinen eine hohe Anisotropie bei einer gleichzeitig relativ niedrigen Sättigungsmagnetisierung, während magnetisch weiche Materialien eine sehr große Sättigungsmagnetisierung und eine sehr kleine Anisotropie aufweisen. Durch Kombination der beiden oben genannten Phasen durch die Austauschkopplung gelingt es, die Vorteile beider Phasen gleichzeitig zu erhalten. Ein Austauschfeder-Magnet ist also dadurch gekennzeichnet, daß eine Kopplung der Spins zwischen der magnetisch harten und der magnetisch weichen Phase vorhanden ist, die entweder direkt erfolgt oder durch einen Kohärenzvermittler, welcher die Kohärenz zwischen der hart- und der weichmagnetischen Phase vermittelt.

Zusätzlich wurde gefunden, daß ferromagnetische Materialien mit besonders typischem Austauschfeder-Mechanismus erhalten wurden, falls die weichmagnetische Phase und/oder die hartmagnetische Phase aus jeweils mindestens zwei Teilphasen besteht. Solche Materialien besitzen ein hohes isotropes Remanenzverhältnis $M_r$ größer 0,5 und einen besonders hohen Reversibilitätsgrad in Feldern unterhalb von $M^Hc$ mit einem $\mu_r$ in der Größenordnung von 5, was bedeutet, daß bei Anlegen eines magnetischen Feldes, welches etwa gleich der Koerzitivfeldstärke der hartmagnetischen Phase ist, nach Wegnehmen des Feldes praktisch die ursprüngliche Remanenz wieder erreicht wird.

Um die gewünschte hohe Gesamtmagnetisierung zu erhalten, ist in der Regel der Volumenanteil der hartmagnetischen Phase geringer als der Anteil der weichmagnetischen Phase zu wählen. Da jedoch die notwendige Voraussetzung für das Vorhandensein eines Austauschfeder-Magneten die Austauschkopplung zwischen der magnetisch harten und der magnetisch weichen Phase ist, hängt dies von den Abständen zwischen den hartmagnetischen Einschlüssen und deren Dimension selbst ab. Es hat sich gezeigt, daß zur optimalen Realisierung der vorliegenden Erfindung die Abstände zwischen den hartmagnetischen Einschlüssen in der gleichen Größenordnung liegen sollen wie die Dimension der Einschlüsse selbst.

Die hartmagnetische Phase und die weichmagnetische Phase entstehen durch kohärente Entmischung einer weichmagnetischen Mutterphase mit kubischer Struktur, wobei die Orientierung der hartmagnetischen Phase auf kristallographisch äquivalente Achsen der Mutterphase statistisch verteilt sind. Dabei wurde gefunden, daß ein Magnet mit Austauschfedereigenschaften, mit hoher Koerzitivkraft und hoher Sättigungsmagnetisierung erhalten wird, wenn der Volumenanteil der weichmagnetischen Phase mindestens 30 %, vorzugsweise mindestens 50 % oder größer ist. Unter anderem hängt die Verteilung der Volumenanteile von hart- und weichmagnetischer Phase davon ab, wie die Zusammensetzung der Legierung beschaffen ist.

Zum Verständnis der räumlichen Verteilung der hartmagnetischen Einschlüsse in der weichmagnetischen Matrix kann man eine Modellvorstellung zugrundelegen, in der die hartmagnetischen Einschlüsse wie in einem kubisch-flächenzentrierten Gitter auf den Ecken und den Seitenmitten eines Würfels sitzen. Da hartmagnetische Werkstoffe im allgemeinen eine starke Kristallanisotropie durch eine entsprechende Kristallstruktur (z.B. hexagonal oder tetragonal) erzeugen und zusätzlich eine magnetische (und deshalb auch eine kristallographische) Kohärenz zwischen der magnetisch harten und weichen Phase vorhanden sein muß, müssen die Kristallstrukturen miteinander kompatibel sein. Demnach kann z.B. eine isotrope Orientierung der hartmagnetischen Einschlüsse in der weichmagnetischen Matrix nicht magnetisch kohärent sein. Besonders günstige Eigenschaften lassen sich mit einer kubischen Kristallstruktur der weichmagnetischen Matrix erhalten. In diesem Fall kann aufgrund der kubischen Symmetrie eine Ausscheidung kristallographisch in mehreren Richtungen orientiert sein. So werden sich die C-Achsen der hartmagnetischen Einschlüsse parallel zu den drei (gleichwertigen) Kristallrichtungen orientieren. Aus statistischen Gründen ist die Orientierung der hartmagnetischen Einschlüsse dann zu gleichen Teilen auf die ausgezeichneten Richtungen der weichmagnetischen Matrix verteilt, beispielsweise zu je einem Drittel auf [100], [010] und [001]. Auf diese Weise bildet sich die oben erwähnte Konfiguration aus, und das Material hat keine magnetische Vorzugsachse. Aus diesen Überlegungen folgt unmittelbar ein mögliches isotropes Verhältnis der remanenten zur Sättigungsmagnetisierung von größer als 0,5, bevorzugt mehr als 0,6. Dagegen ist bei einem konventionellen Magneten, bei welchem mittels aus dem Stand der Technik bekannten Methoden die Anisotropie-Achsen im Material isotrop verteilt sind, lediglich ein Verhältnis von Remanenz zu Sättigungsmagnetisierung von 0,5 zu erzielen.

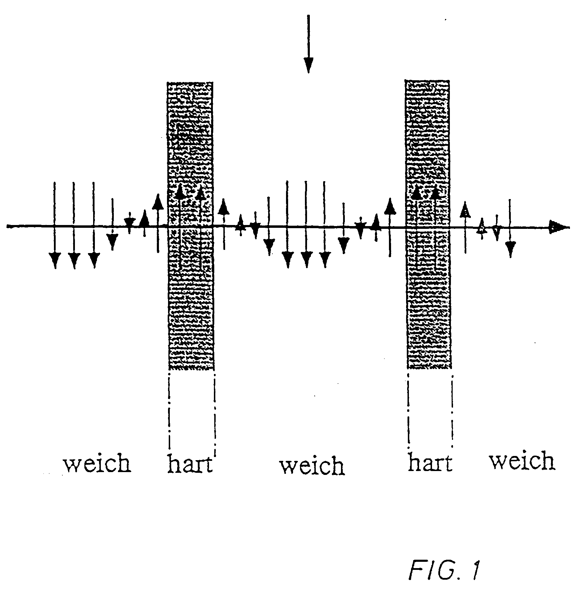

Das wichtigste Kennzeichen des Austauschfeder-Magneten ist die außerordentlich hohe Reversibilität. Darunter wird hier verstanden, daß bei Anlegen eines magnetischen Feldes, welches kleiner als die Koerzitivfeldstärke der hartmagnetischen Phase ist, nach Wegnehmen des Feldes die ursprüngliche Remanenz nahezu wieder erreicht wird. Dies kann sogar dann gelten, wenn das angelegte magnetische Feld im Bereich der Koerzitivfeldstärke der hartmagnetischen Phase liegt. Ein einfaches eindimensionales Modell ist in Figur 1 gezeigt. In den schattierten Bereichen befinde sich die hartmagnetische Phase mit einer sehr großen Anisotropiekonstanten, in den restlichen Bereich befinde sich die weichmagnetische Phase mit einer sehr kleinen Anisotropiekonstanten und einer hohen Sättigungsmagnetisierung. Bei Anlegen eines Gegenfeldes wird die Magnetisierung in den weichmagnetischen Bereichen in Feldrichtung gedreht (Pfeil), während die Magnetisierung in den hartmagnetischen Bereichen in ihrer Ursprungsstellung verbleibt. Es findet also keine Ummagnetisierung im traditionellen Sinne statt, es wird vielmehr durch das äußere Feld Energie in die Spinkette (Austauschenergie) gedrückt. Nach Abschalten des Feldes wird die in der Spinkette gespeicherte Energie vollständig zurückgewonnen, daß die Austauschenergie die Spinstruktur wieder zu glätten sucht. Dies bedeutet, daß eine außerordentlich hohe Reversibilität bei teilweiser Ummagnetisierung zu erwarten ist. Erst nach Erreichen einer ausreichend hohen Feldstärke wird die Magnetisierung geschaltet. Die Austauschfeder-Magneten haben (bei großen Koerzitivfeldstärken) typischerweise ein $\mu_{rev}$ von größer als 2,5, während konventionelle Magneten ein $\mu_{rev}$ von 1 - 2 besitzen. $\mu_{rev}$ ist definiert durch die Gleichung

$$\Delta B = \mu o \cdot \mu_{rev} \cdot \Delta H.$$

Es hat sich herausgestellt, daß der Austauschfedermagnet eindeutig dadurch charakterisiert ist, daß bei dem Komposit-Material nach vorhergehender magnetischer Sättigung in einer Richtung bei Anlegen eines entgegengerichteten Feldes, welches gleich der Koerzitivfeldstärke des magnetischen Materials ist, nach Wegnehmen des Feldes mindestens 65 % der ursprünglichen Sättigungsremanenz wieder erreicht werden, wobei die Sättigungsremanenz mindestens 50 % der Sättigungsmagnetisierung beträgt.

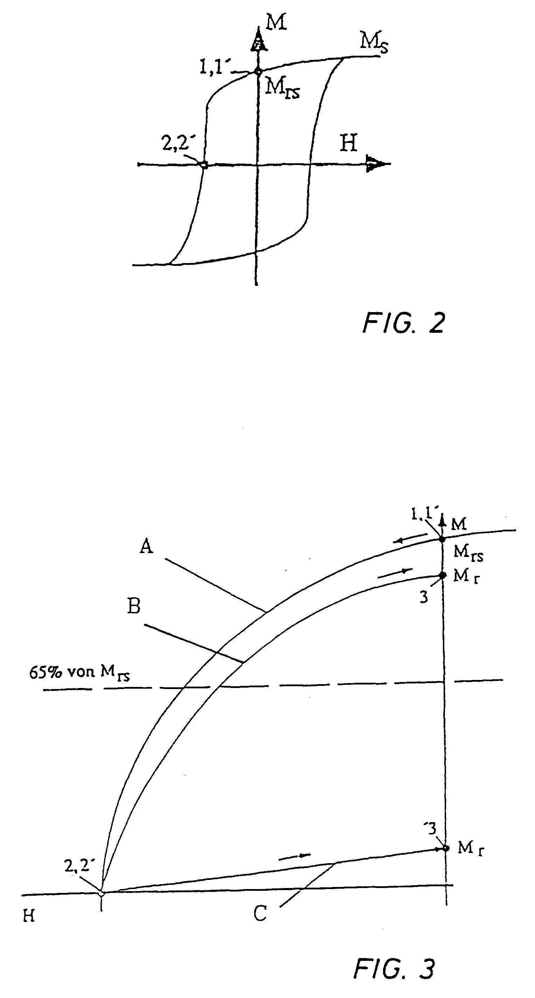

Dazu wird auf die Figuren 2 - 3 verwiesen, in denen die Magnetisierungskurve dargestellt ist. Nach Aufmagnetisierung im Feld H wird zunächst die Sättigungsmagnetisierung $M_s$ und nach Wegnehmen des Feldes im Punkt (1,1') die Sättigungsremanenz $M_{rs}$ erreicht. Wird dann ein Gegenfeld $H = -H_c$ von der Größe der Koerzitivfeldstärke angelegt, so durchfährt das Material die Kurve A bis zum Punkt 2,2', wo es entmagnetisiert ist (M = 0). Wird das Gegenfeld weggenommen (H = 0), so wird bei einem Magneten gemäß dem Stand der Technik der Punkt 3' erreicht (Kurve C), bei dem ein Teil der remanenten Magnetisierung $M_r$ wieder gewonnen wird, wobei jedoch $M_r/M_s < 0,65$ ist.

Bei einem Magneten mit Federaustauscheigenschaften dagegen wird auf der Kurve B der Punkt 3 erreicht, wobei ersichtlich $M_r/M_s > 0,65$ ist.

Es wurde gefunden, daß ein Material mit Federaustauscheigenschaften durch eine Legierung dargestellt wird, welche aus wenigstens zwei ferro- und/oder ferrimagnetischen Phasen besteht und welche den folgenden Aufbau besitzen kann:

$$RE_x Fe_y B_z Si_u T_v,$$

wobei

RE  = eines oder mehrere Elemente ausgewählt aus seltenen Erden (Ce, Pr, Nd, Sm, Eu, Cd, Tb, Dy, Ho, Er, Tm, Yb, Lu) und/oder Y, Zr. und Hf und wobei

T   = eines oder mehrere Übergangselemente mit kubisch-raumzentrierter Struktur (Cr, Nb, Mo, V) und wobei

x   nicht mehr als 10 Atom%

y   nicht mehr als 85 Atom%

z   nicht mehr als 25 Atom%

u   nicht mehr als 10 Atom%

v   nicht mehr als 10 Atom%

ist.

Bei einer derartigen Zusammensetzung kann die Koerzitivfeldstärke durch Auswahl der Seltenerdkomponente RE innerhalb weiter Grenzen variiert und auf einen gewünschten Wert eingestellt werden, ohne daß hierbei die Sättigungsmagnetisierung und die isotrope Remanenz wesentlich verändert werden.

Außerdem kann durch Auswahl der Übergangsmetallkomponente T die Sättigungsmagnetisierung bis um etwa 50 % variiert und auf einen gewünschten Wert eingestellt werden, ohne daß hierbei die Koerzitivfeldstärke und das isotrope Verhältnis von Remanenz zu Sättigungsmagnetisierung wesentlich verändert werden.

Das Element V stabilisiert die $Fe_{23}B_6$ Phase; Si bewirkt die Ausbildung und Stabilisierung der hartmagnetischen Phase.

Die Herstellung des eben genannten erfindungsgemäßen Magnetmaterials kann wie folgt geschehen. Eine Schmelze, bestehend aus RE, Fe, T, Si und B, deren stöchiometrisches Verhältnis die Zusammensetzung des Endprodukts bestimmt, wird auf eine rotierende Metallwalze gespritzt, die entstehenden amorphen Flitter können in einer Mahlvorrichtung, die aus dem Stand der Technik bekannt ist, bedarfsweise zu der gewünschten Korngröße gemahlen werden. Anschließend muß durch Tempern vorzugsweise im Bereich von 670 - 780°C während vier bis zehn Minuten das gewünschte Verhältnis von hartmagnetischer zu weichmagnetischer Phase eingestellt werden.

Ein anderes Verfahren stellt das mechanische Legieren dar, bei welchem unter Inertgas-Atmosphäre die obige Zusammensetzung mehrere Tage in einer Kugelmühle beispielsweise mit Stahlkugeln intensiv gemahlen und anschließend getempert wird.

Beispiel 1

(Herstellungsbeispiel eines erfindungsgemäßen magnetischen Materials)

Eine Probe der Zusammensetzung $Nd_{3,8}Fe_{73,3}V_{3,9}B_{18,0}Si_{1,0}$ (Angabe jeweils in Atom%) wird auf eine Temperatur von 1250°C gebracht. Das flüssige Material wird auf eine Kupferwalze mit 15 cm Durchmesser, welche sich mit 4300 U/min dreht, gespritzt. Die entstandenen amorphen Flitter werden getempert und zwar

Probe 1: 5 Minuten bei 708°C

Probe 2: 5 Minuten bei 725°C

Probe 3: 5 Minuten bei 775°C.

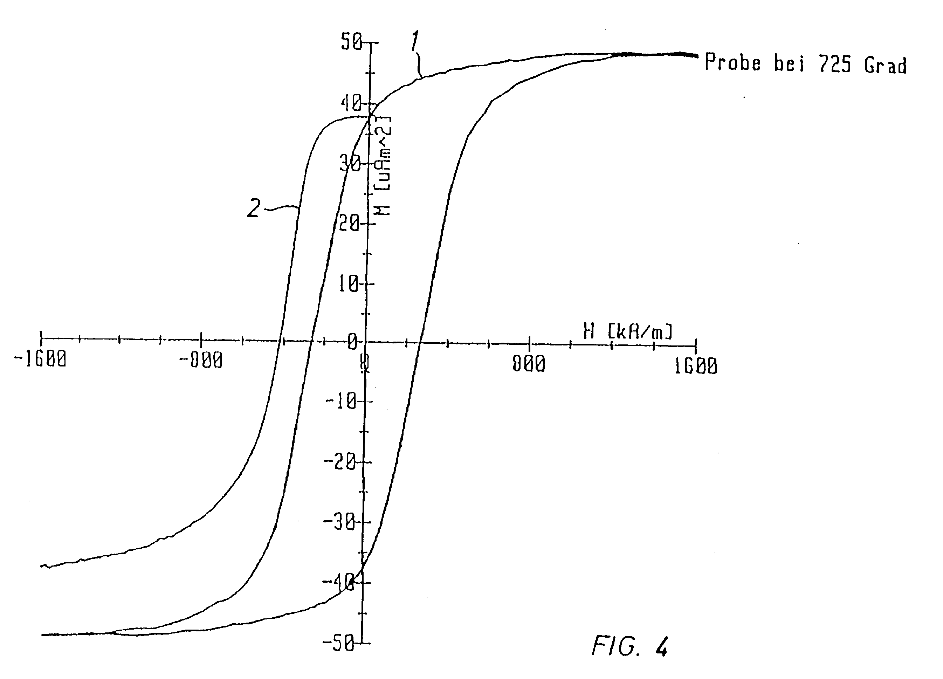

Die Abbildung 4 zeigt die mit der Probe 2 erhaltene Meßkurve, nämlich Hysteresekurve (1) und Remanenzkurve (2). Die Proben besitzen die in der folgenden Tabelle 1 aufgeführten magnetischen Kennwerte.

Tabelle 1

| Probe | $H_{ci}$ (kA/m) | $H_{Ri}$ (kA/m) | $M_S$ (kA/m) | $M_R/M_S$ | $H_R/H_C$ |
|---|---|---|---|---|---|
| 1 | 281 | 362 | 1350 | 0,72 | 1,3 |
| 2 | 266 | 419 | 1350 | 0,77 | 1,6 |
| 3 | 162 | 552 | 1350 | 0,67 | 3,4 |

Charakteristisch für die erfindungsgemäßen Materialien ist das hohe $M_R/M_S$-Verhältnis bei gleichzeitig hoher Magnetisierung und das große Verhältnis von remanenter zu normaler Koerzitivfeldstärke, wie aus der Tabelle 1 sowie aus der Abbildung 2 zu ersehen ist.

Als Materialien mit der beschriebenen Austauschkopplung wurden auch beispielsweise Mischungen der Zusammensetzung
- $\alpha$-Eisen und $Nd_2Fe_{14}B$
- $Fe_{23}B_6$ und $Y_2Fe_{14}B$
gefunden.

Ein erfindungsgemäßes Material mit Austauschfederwirkung mit der Zusammensetzung des obigen Beispiels wurde mit einem konventionellen Magneten auf der Basis von NdFeB verglichen. Die Tabelle 2 zeigt den Vergleich der magnetischen Kennzahlen:

Tabelle 2

| Material | $H_{ci}$ (%) (kA/m) | $H_{Ri}$ (%) (kA/m) | $H_{Ri}/H_{ci}$ | $M_S$ (kA/m) | $\mu_{rev}$ |
|---|---|---|---|---|---|
| erf.ge-mäß | 281 | 362 | 1,29 | 1353 | 4,44 |
| NdFeB | 1520 | 1590 | 1,05 | 955 | 1,31 |

Die Messung geschah mit einem Schwingungsmagnetometer bei einer maximalen Feldstärke von ± 1592 kA/m und bei Raumtemperatur.

Ferner wurde mit beiden Materialien die Korrosionsfestigkeit gemessen, indem die Materialien 1 Stunde beziehungsweise 60 Stunden lang in einem Klima von 80°C und 80 % relativer Luftfeuchte gelagert wurden. Dabei ergaben sich folgende Änderungen $\Delta$ (%) der magnetischen Eigenschaften, nämlich Koerzitivfeldstärke und Sättigungsmagnetisierung

| Material | $\Delta H_c$ (%) 1 Std. | $\Delta H_c$ (%) 60 Std. | $\Delta M_S$ (%) 1 Std. | $\Delta M_S$ (%) 60 Std. |
|---|---|---|---|---|
| erf.gemäß | 0 | 0 | 0 | 0 |
| NdFeB | −12 | −15 | −23 | −23 |

Im folgenden sind weitere Beispiele mit der erfindungsgemäßen Zusammensetzung und die magnetischen Kenndaten angegeben. Dabei wurden die in den Beispielen 2 bis 5 jeweils angegebenen Schmelzen (Elementenverteilung in Atom%) wie beschrieben auf eine rotierende Metallwalze gespritzt und die entstehenden amorphen Flitter wurden jeweils bei 700°C einige Minuten getempert. Dabei wird $M_r$ bei H = 0 gemessen, nachdem vorher das Material mit $-H_c$ entmagnetisiert worden war (Figur 3).

Beispiel 2

$Nd_{3.8}V_{3.9}Si_{1.0}B_{18}Fe_{73.3-v}Nb_v$

| v | 0 | 0.5 | 1 | 2 | 5 |
|---|---|---|---|---|---|
| $M_s$ (Am²/kg) | 170 | 158 | 133 | 112 | 92 |
| $H_c$ (kA/m) | 287 | 263 | 271 | 223 | 88 |
| $H_R$ (kA/m) | 350 | 350 | 350 | 350 | 350 |
| $M_{rs}/M_s$ | 0.76 | 0.78 | 0.77 | 0.72 | 0.68 |
| $M_r/M_{rs}$ | 0.72 | 0.67 | 0.71 | 0.87 | 0.96 |

Beispiel 3

$Nd_{3.8}V_{3.9}Si_{1.0}B_{18}Fe_{73.3-v}Mo_v$

| v | 0 | 0.5 | 1 | 2 |
|---|---|---|---|---|
| $M_s$ (Am²/kg) | 170 | 128 | 120 | 100 |
| $H_c$ (kA/m) | 287 | 271 | 255 | 151 |
| $H_R$ (kA/m) | 350 | 374 | 374 | 334 |
| $M_{rs}/M_s$ | 0.76 | 0.76 | 0.74 | 0.69 |
| $M_r/M_{rs}$ | 0.73 | 0.77 | 0.82 | 0.92 |

Beispiel 4

$Nd_{3.8}Si_{1.0}B_{18}Fe_{77.2-v}Mo_v$

| v | 0 | 0.5 | 1 | 2 | 5 |
|---|---|---|---|---|---|
| $M_s$ (Am²/kg) | 164 | 162 | 152 | 134 | 112 |
| $H_c$ (kA/m) | 191 | 191 | 191 | 191 | 223 |
| $H_R$ (kA/m) | – | 263 | 255 | 247 | 430 |
| $M_{rs}/M_s$ | 0.75 | 0.74 | 0.74 | 0.76 | 0.71 |
| $M_r/M_{rs}$ | 0.75 | 0.74 | 0.70 | 0.71 | 0.91 |

Beispiel 5

$Nd_{3.8}V_{3.9}Si_{1.0}B_{18}Fe_{73.3-v}Cr_v$

| v | 0 | 2 | 5 | 10 | 15 |
|---|---|---|---|---|---|
| $M_s$ (Am²/kg) | 170 | 140 | 88 | 82 | 76 |
| $H_c$ (kA/m) | 287 | 255 | 199 | 223 | 263 |
| $H_R$ (kA/m) | 350 | 462 | 597 | 629 | 661 |
| $M_{rs}/M_s$ | 0.76 | 0.76 | 0.72 | 0.65 | 0.67 |
| $M_r/M_{rs}$ | 0.73 | 0.84 | 0.92 | 0.93 | 0.95 |

Wie oben bereits ausgeführt, wird eine Schmelze bestehend aus der angegebenen Legierung auf eine rotierende Metallwalze gespritzt. Es wurde gefunden, daß durch geeignete Wahl der Rotationsgeschwindigkeit der Walze entstehende metallische Flitter die jeweils gewünschten magnetischen Eigenschaften erhalten. Eine nachfolgende Temperung ist dabei nicht erforderlich.

Beispiel 6

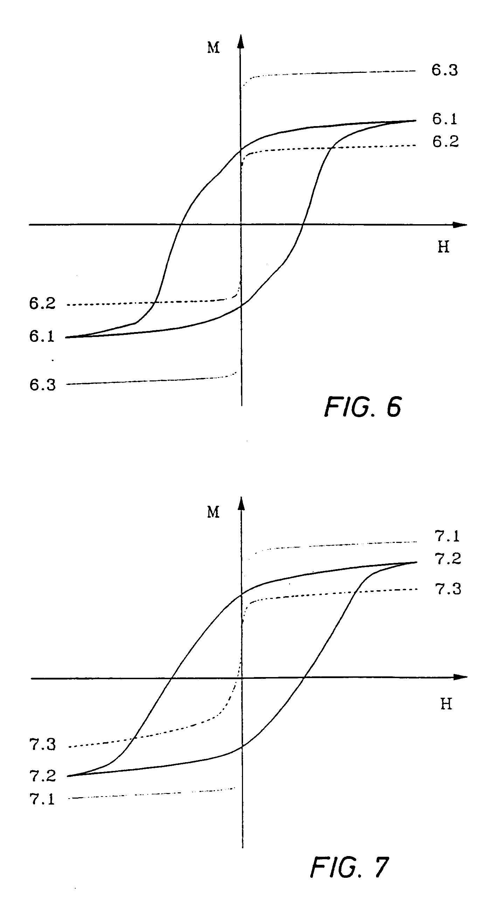

Eine Schmelze der Zusammensetzung $Nd_{9,5}Fe_{85}Si_1B_{4,5}$ wurde auf eine rotierende Kupferwalze mit einem Umfang von 20 cm gespritzt, welche mit 2000 bzw. 3000 bzw. 4000 Umdrehungen/min. rotiert. Die Figur 6 zeigt die mit diesen Zusammensetzungen erhaltenen Magnetisierungskurven, wobei bedeuten
6.1. 2000 U/min
6.2. 3000 U/min
6.3. 4000 U/min
Aus den Kurven ist ersichtlich, daß bei 2000 U/min. ein Material mit brauchbaren Eigenschaften erhalten wird.

Beispiel 7

Mit einer Schmelze der Zusammensetzung $Nd_{9,5}Fe_{79}V_5Si_2B_{4,5}$ wurde wie in Beispiel 2 verfahren.
In Figur 7 bedeuten
7.1. 2000 U/min
7.2. 3000 U/min
7.3. 4000 U/min
Bei 3000 U/min. wird ein Material mit brauchbaren Eigenschaften erhalten.

Beispiel 8

Eine Schmelze der Zusammensetzung $Nd_6Fe_{85}Ni_3B_6$ wird auf ein mit 4400 Umdrehungen/min. rotierendes Kupferrad gespritzt. Die entstehenden Flitter haben magnetische Austauschfeder-Mechanismus-Eigenschaften. Die magnetischen Daten wurden gemessen, dabei gilt für die Messung von $M_r$ das bereits oben Ausgeführte.

$M_2$ = 170 Am²/kg
$H_c$ = 120 kA/m
$M_{rs}/M_s$ = 0,70
$M_r/M_{rs}$ = 0,74

Beispiel 9

Eine ferromagnetische Legierung der Zusammensetzung $Nd_{3,8}Fe_{77,2}B_{19}$ wurde hergestellt (Legierung A), wie oben beschrieben und zu der gewünschten Korngröße gemahlen. Anschließend wurde das Komposit zehn Minuten lang bei einer Temperatur von 675°C getempert. Die erreichte Koerzitivkraft betrug $M^Hc$ = 160 kA/m. Durch kontinuierliche Beobachtung mittels Röntgenstrahlenstrukturanalysetechnik (DTXD = Dynamic Temperature X-Ray Diffraction) wurde festgestellt, daß die weichmagnetische Phase zunächst aus $Fe_{23}B_6$ besteht und dann in $Fe_3B$ und $\alpha$-Fe zerfällt.

Beispiel 10

Eine Legierung der Zusammensetzung $Nd_{3.8}Fe_{73.3}B_{18.0}Si_{1.0}V_{3.9}$ (Legierung B) wurde hergestellt wie oben beschrieben und für 10 Minuten bei 675°C getempert.

Durch DTXD-Technik wurde festgestellt, daß das Komposit aus 90 % weichmagnetischer Phase und 10 % hartmagnetischer Phase bestand. Die weichmagnetische Phase besteht aus den beiden Teilphasen $Fe_{23}B_6$ sowie $Fe_3B$, die hartmagnetische Phase besteht aus $Nd_2Fe_{14}B$. Das Komposit hat eine Koerzitivkraft von $M^Hc$ = 200 kA/m.

Beispiel 11

Eine Legierung der Zusammensetzung wie in Beispiel 10 wurde hergestellt und anschließend 10 Minuten bei 715°C getempert. Diesmal besteht das Komposit aus 80 % weichmagnetischer Phase, welche die Teilphasen $Fe_{23}B_6$ sowie $Fe_3B$ enthält und 20 % hartmagnetischer Phase ($Nd_2Fe_{14}B$). Die Koerzitivkraft beträgt 300 kA/m. Nach Anlegen eines Sättigungsfeldes von 1200 kA/m wurde ein $m_R = M_R/M_S$ von 0,76 gemessen, der $\mu_r$-Wert ($\mu_r = 1 + M/H$) betrug 5.

Beispiel 12

Eine Zusammensetzung wie in Beispiel 10 wurde 10 Minuten bei 775°C getempert. Die weichmagnetische Phase besteht aus den Teilphasen $\alpha$-Fe und $Fe_3B$, die hartmagnetische Phase aus $Nd_2Fe_{14}B$. Die Koerzitivkraft beträgt 150 kA/m.

Zusammenfassend kann dazu also ausgesagt werden, daß bei einer Schmelze, bestehend aus RE, Fe, B, Si, und T, deren stöchiometrisches Verhältnis die Zusammensetzung des Endprodukts bestimmt, und die in einer Inertgasatmosphäre auf eine rotierende Metallwalze gespritzt wird, in den so erhaltenen amorphen Flittern durch Tempern im Bereich von 650 bis 780°C die gewünschten Phasen, die Dispersion der Phasen, die Zusammensetzungen der Phasen und das Mengenverhältnis von hartmagnetischen zu weichmagnetischen Phasen, die insgesamt die magnetischen Eigenschaften bestimmten, eingestellt werden. Alternativ dazu kann die Rotationsgeschwindigkeit der Metallwalze so gewählt werden, daß die entstehenden kristallinen Flitter ohne nachfolgendes Tempern die gewünschten magnetischen Eigenschaften haben.

Für die erfindungsgemäßen Austauschfeder-Magneten wurden folgende bevorzugte Anwendungen gefunden, wobei die Erfindung nicht darauf beschränkt ist.

A) Für Permanentmagneten

Als permanentmagnetische Erregung beispielsweise für Elektromotoren- und generatoren werden Dauermagnete auf der Basis von AlNiCo, Seltenerd-Cobalt, NdFeB oder Hartferrit verwendet. Während sich die AlNiCo-Legierung durch eine hohe Magnetisierung und eine kleine Koerzitivfeldstärke charakterisieren, liegt im Fall von Hartferrit gerade der umgekehrte Fall einer hohen Koerzitivfeldstärke bei einer kleinen Magnetisierung vor. Im Falle der Seltenerd-Verbindungen ist die Magnetisierung bei einer teilweise sehr großen Koerzitivfeldstärke zwar sehr viel größer als bei Ferrit, bleibt aber deutlich kleiner als bei weichmagnetischen Verbindungen oder auch AlNiCo. Die Fähigkeit eines magnetischen Werkstoffs, Energie zu speichern, ist direkt durch das maximale Energieprodukt, d.h. (BH)max gegeben. Unter idealen Bedingungen ist das maximale Energieprodukt durch $\mu_o M_s^2/4$ gegeben, dabei wird vorausgesetzt, daß die Koerzitivfeldstärke hinreichend groß ist. Eine weitere Steigerung der Koerzitivfeldstärke über den Wert $0,5\ M_s$ hinaus hat keinen Einfluß auf das maximale Energieprodukt, das maximale Energieprodukt hängt somit nur von der Sättigungsmagnetisierung ab.

Um möglichst große Energien magnetisch speichern zu können, ist somit eine große Magnetisierung bei hinreichender großer Koerzitivfeldstärke des Magnetwerkstoffs wünschenswert. Diese beiden Forderungen werden von dem erfindungsgemäßen Material erfüllt, zudem werden einige Probleme vermieden:

1. Da im Austauschfedermagnet im Verhältnis weniger seltene Erde eingebaut ist als in einem konventionellen NdFeB- oder SmCo-Magneten, ist das erfindungsgemäße Material preisgünstiger.

2. Durch geeignete Wahl eines weich- und eines hartmagnetischen Materials können die Eigenschaften des Komposits getrennt voneinander eingestellt werden. So kann zum Beispiel durch den Anteil der harten Phase die Koerzitivfeldstärke beziehungsweise die Schaltfeldstärke eingestellt werden, durch die geeignete Wahl der weichen Phase wird dagegen die Sättigungsmagnetisierung eingestellt.

3. Durch geeignete Wahl der beiden Anteile gelingt es, einen Magneten mit außerordentlich hohem Energieprodukt zu erreichen. Bedingt durch die hohe Magnetisierung ist das maximal mögliche Energieprodukt

8

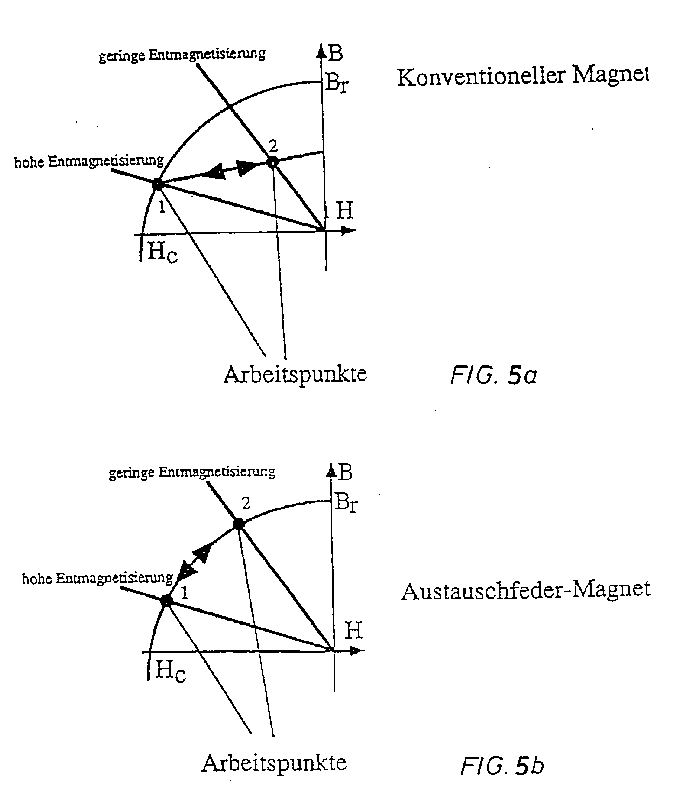

$\mu_o M_s^2$ : 1,7 deutlich größer als das eines reinen NdFeB-Magneten. Durch die außerordentlich hohe Reversibilität wird das dynamische Energieprodukt, das im Fall von konventionellen Magneten deutlich kleiner als das statische ist, erheblich vergrößert. Im praktischen Betrieb beispielsweise einer Synchronmaschine treten, bedingt durch die unterschiedlichen magnetischen Längen bei Drehung des Rotors, verschieden starke Entmagnetisierungen des Permanentmagneten auf. Bei einem konventionellen Magneten wird, ausgehend von dem am stärksten entmagnetisierten Betriebszustand des Magneten, sich der Betriebszustand auf einer Subschleife befinden, wie die Figur 5a zeigt. Man erkennt, daß die Entmagnetisierung größtenteils irreversibel erfolgt. Im GEgensatz dazu ist die Entmagnetisierung im Fall des neuartigen Austauschfeder-Magneten (Figur 5b) nahezu vollständig reversibel, woraus unmittelbar folgt, daß ein weitaus höheres dynamisches Energieprodukt (BH) erreicht werden kann.

4. Bezüglich der Aufmagnetisierung eines Permanentmagneten in einem magnetischen Kreis tritt bei einem konventionellen Magneten das Problem der irreversiblen Entmagnetisierung auf. Dies bedeutet, daß der Magnet sich nach Aufmagnetisierung durch Entfernen aus der Magnetisierungseinrichtung teilweise entmagnetisiert (vgl. Figur 5a, Punkt 1), wodurch sich automatisch ein Betriebspunkt auf einer Subschleife ergibt. Beim Einbau in z.B. eine elektrische Maschine wird daher nicht das volle Potential entfaltet. Dieser Nachteil eines konventionellen Magneten kann nur durch Aufmagnetisierung in z.B. der elektrischen Maschine begegnet werden, was allerdings große Energien erfordert. Der erfindungsgemäße Austauschfeder-Magnet hat diesen Nachteil nicht. Er kann demnach im aufmagnetisierten Zustand ohne irreversiblen Verlust verwendet werden. Aufgrund der hohen Magnetisierung wird entsprechend weniger magnetisches Volumen benötigt, um einen gewünschten magnetischen Fluß zu erreichen.

5. Durch die Wirkungsweise des Austauschfeder-Magneten ist für die magnetische Härte nicht die Größe der einzelnen Körner wie in einem Dauermagneten relevant, sondern ausschließlich die Mikrostruktur der weich- und der hartmagnetischen Phase. Es entfällt somit die Notwendigkeit, einen Permanentmagneten aus hinreichend kleinen Körnern aufzubauen, um die erwünschten magnetischen Eigenschaften zu erhalten. Daraus folgt unter anderem, daß korrosive Einflüsse, die bei den hochwertigen, auf Seltenerd-Basis hergestellten Magneten außerordentlich stark sind, weit herabgesetzt werden. Es kommt hinzu, daß die korrosionsanfällige hartmagnetische Phase durch eine weniger stark korrosionsanfällige weichmagnetische Matrix geschützt wird.

6. Durch die intrinsischen isotropen Eigenschaften des erfindungsgemäßen Materials ist eine richtungsunabhängige Stabilität gegen Fremdfelder gegeben. Dies spielt insbesondere bei rotierenden Maschinen, die naturgemäß rotierende Magnetfelder und somit magnetische Querbelastungen des Permanentmagneten bedeuten, eine große Rolle. Bei konventionellen Magneten bewirken Fremdfelder in Querrichtung eine teilweise irreversible Entmagnetisierung, während beim Austauschfeder-Magneten diese Nachteile nicht entstehen.

7. Da alle hartmagnetischen Werkstoffe zuerst eine bestimmte Korngröße im Bereich von kleiner als 1 μm bis hin zu größer als 10 μm zur Erreichung der hartmagnetischen Eigenschaften erfordern, werden diese Werkstoffe zunächst pulverisiert, oder auch direkt als Pulver hergestellt und anschließend mittels eines Sinterprozesses verdichtet. Bei diesen Prozessen ist es schwierig, die mechanischen Abmessungen genau zu erreichen und komplizierte Teile zu erzeugen. Aus Kunststoffen (z.B. Polyethylen oder Polypropylen) lassen sich wesentlich leichter komplizierte Formteile gewinnen. Aus diesem Grunde werden hartmagnetische Teilchen in die Kunststoffmasse mit eingebettet, um die Vorteile auf Permanentmagnete zu übertragen. Man nimmt die dadurch entstehende kleinere Magnetisierung in Kauf, selbstverständlich wird man als Füllstoff einen Werkstoff mit möglichst hoher Magnetisierung verwenden, damit die gesamte Magnetisierung des Kunststoffs mit seiner Füllung nicht zu klein wird. Das erfindungsgemäße Material ist gerade für diese Anwendung besonders geeignet, da es eine hohe Magnetisierung besitzt und vor allem eine hohe isotrope Remanenz aufweist. Während konventionelle hartmagnetische Werkstoffe innerhalb des Kunststoffs mit einem magnetischen Feld ausgerichtet werden müssen, um optimale Eigenschaften zu erhalten, entfällt dieser Vorgang bei Verwendung eines Austauschfeder-Magneten. Da ein Ausrichtvorgang meist nicht durchführbar ist, liegt ein großer Vorteil des Austauschfeder-Magneten vor.

B) Für magnetische Aufzeichnungsträger

Beispiel 13

Mit den beschriebenen magnetischen Materialien gemäß Probe 1 - 3 wird ein magnetischer Aufzeichnungsträger hergestellt, indem die amorphen Flitter in einer Inertgasatmosphäre zu einer gewünschten Teilchengröße gemahlen werden. Bei den so entstandenen Pigmenten bleiben die intrinsischen Eigenschaften voll erhalten. Anschließend werden die Pigmente in einem Bindemittelgemisch bestehend aus einem Vinylchlorid-Vinylacetat-Copolymer und einem Polyester-Polyurethan, welche in einem organischen Lösungsmittel gelöst werden, dispergiert und ohne Ausrichtbehandlung in einem Magnetfeld auf eine Polyesterfolie aufgetragen und getrocknet.

Auf den so erhaltenen magnetischen Aufzeichnungsträger können in hervorragender Weise Signale in Längsspur-, Schrägspur- oder Senkrechtaufzeichnung aufgebracht werden; er ist für analoge oder digitale Signale gleichermaßen geeignet. Besonders bevorzugt ist ein solches Material für Diskettenmedien geeignet. Durch Erhöhung der maximal erzielbaren Remanenz gegenüber konventionellen magnetischen Pigmenten wird ein deutlich höheres Lesesignal erhalten. Ferner ist das Dispergierverhalten der Pigmente in der Bindemittellösung wesentlich günstiger als bei konventionellen magnetischen Pigmenten, die unmittelbar nach der Herstellung magnetisch neutral sind, weil wie oben bereits ausgesagt, die Vorzugsachsen der magnetisch harten Phase isotrop in jedem Teilchen verteilt sind.

Beispiel 14

Eine Schmelze der Zusammensetzung $Ce_2Fe_{14}B$ wird wie in Beispiel 13 weiter verarbeitet. Mit den erhaltenen Pigmenten wird ein magnetischer Aufzeichnungsträger aufgebaut. Infolge des niedrigen Curie-Punktes von Ce (Tc = 435°K) ist das erhaltene Material hervorragend als Slave-Band für thermomagnetisches Duplizieren geeignet.

Beispiele 15 bis 16

Eine Schmelze der Zusammensetzung wie in Beispiel 13 oder 14 wird durch Aufdampfen im Vakuum auf einen metallischen Schichtträger mit einer Dicke von 0,3 µm aufgebracht. Durch 1 - 10 Minuten langes Tempern bei 650 bis 750°C läßt sich ein magnetisches Medium zur hochdichten longitudinalen oder senkrechten Aufzeichnung erzeugen.

Beispiel 17

Es wird ähnlich verfahren wie in Beispiel 15 bis 16, jedoch wird die Zusammensetzung nach Beispiel 1 oder 2 durch Sputtern auf einen metallischen Schichtträger aufgebracht. Auch hierbei wird ein Medium zur hochdichten longitudinalen oder senkrechten Aufzeichnung erzeugt.

Die oben beschriebene Temperbehandlung ist natürlich nicht möglich, falls das Trägermaterial eine dünne Kunststoff-Folie, beispielsweise bestehend aus Polyethylenterephthalat, ist. Bei derartigen magnetischen Aufzeichnungsträgern wird die Oberfläche der aufgedampften oder durch Sputtern aufgebrachten Schicht durch kurzzeitige Bestrahlung im Bereich weniger ms mit einem Laserstrahl oder Elektronenstrahl auf die erwünschte Verteilung von hart- und weichmagnetischer Phase gebracht. Der Strahl kann die Schichtoberfläche rasterartig abtasten ("wobbeln"), ähnlich dem aus dem Stand der Technik bekannten sogenannten Laserglazing, oder die Bestrahlung geschieht großflächig mit einem sogenannten Excimer-Laser. Je nach der Intensität sowie der Dauer der Bestrahlung kann von der gesamten aufgebrachten Schichtdicke nur ein Teil, d.h. der ober Teil die erwünschten Federaustausch-Eigenschaften erhalten. Dadurch ist eine reproduzierbare, rationelle und schnell durchführbare Herstellung von Dünnschichtmedien ohne Wärmebehandlung möglich, auch wenn diese Dünnschichtmedien eine Schichtdicke von unter 1 µm haben und wenn sie auf dünne Schichtträger im Bereich von 3 - 150 µm Trägerdicke aufgedampft oder gesputtert worden sind.

Die durch die Erfindung erzielten zusätzlichen Vorteile für magnetische Aufzeichnungsträger lassen sich wie folgt zusammenfassen.

1) Aufgrund der hohen Reversibilität bei teilweiser Entmagnetisierung ergibt sich ein deutlich höheres Lesesignal. Wenn der Magnetkopf beim Lesevorgang das Medium magnetisch kurzschließt, steigt die Remanenz nahezu wieder auf ihren Ursprungswert an. Konventionelle Medien weisen durch den beschriebenen Recoilmechanismus einen Abfall des Lesesignals von normalerweise 4 bis 5 dB auf, der bei dem erfindungsgemäßen Medium inhärent vermieden wird.

2) Da keine magnetische Vorzugsrichtung existiert, erhält man immer, da der Ausrichtungsvorgang entfällt, isotrope Remanenz. Besonders günstig ist dies für Disketten-Medien und Festplatten-Medien, bei welchen eine Ausrichtung unerwünscht ist, weil sonst der Signalpegel schwankt. In diesem Fall erlaubt die Anwendung eines Austauschfeder-Magneten eine Steigerung des Lesesignals gegenüber konventionellen Medien. Hingewiesen wird außerdem nochmals auf die günstigen Dispergiereigenschaften der isotropen Pigmente im Gegensatz zu konventionellen feinteiligen magnetischen Pigmenten, beispielsweise hochkoerzitiven nadelförmigen Pigmenten. Bei diesen besteht in der magnetischen Dispersion stets das Problem der Reagglomerisation der Pigmente infolge der gegenseitigen Anziehung, welche durch Rezept- und/oder Verfahrensmaßnahmen gelöst werden müssen.

3) Da die Hysteresekurve weitgehend reversibel ist, kann durch die Anwendung eines Stroms im Lesekopf ohne Beeinträchtigung der geschriebenen Informationen das Lesesignal vergrößert werden. Der Lesestrom im Lesekopf muß lediglich so beschaffen sein, daß Feldstärken erzeugt werden, die kleiner als die Schaltfeldstärke der hartmagnetischen Phase sind. Bei einem Medium gemäß dem Stand der Technik wird bei Anwendung eines zusätzlichen Lesestroms die remanente Magnetisierung verändert.

4) Bei Erreichen der Koerzitivfeldstärke kann der erfindungsgemäße Aufzeichnungsträger auch ohne äußere Felder entmagnetisiert werden. Im Gegensatz zu konventionellen Medien geht dabei die gespeicherte Information nicht verloren, da sie in der Austauschfeder gespeichert bleibt. Die maximale Aufzeichnungsdichte wird demnach bei dem erfindungsgemäßen magnetischen Aufzeichnungsträger nicht durch die Entmagnetisierung bestimmt.

5) Besondere Vorteile ergeben sich auch für metallische Dünnschichten, bei welchen durch Aufdampfen oder Sputtern bindemittelfreie Schichten erzeugt werden. Bei konventionellen Schichten haben diese eine Dicke von 0,2 - 0,3 μm und müssen eine hinreichend feine Mikrostruktur aufweisen. Diese ist typischerweise säulenartig, so daß die Säulen im Idealfall als autarke magnetische Bezirke vorliegen. Aufgrund von thermischen Stabilitätsproblemen (Superparamagnetismus) können die Teilchen in Dünnschichtmedien nicht beliebig klein gemacht werden. Vollkommen anders reagiert dagegen eine Dünnschicht, die mit Austauschfeder-Magneten aufgebaut ist. Bei dieser liegt, wie bereits erwähnt, nicht ein eindomäniges Verhalten im traditionellen Sinne vor. Die Speicherung erfolgt im Prinzip in den hartmagnetischen Einschlüssen, die weichmagnetische Matrix glättet dabei die Magnetisierung. Da die hartmagnetischen Einschlüsse sehr klein sind, ist trotz der Glättungswirkung eine sehr dichte magnetische Speicherung möglich. Demnach verhält sich ein erfindungsgemäßer Dünnschichtfilm wie eine austauschgekoppelte traditionelle ferromagnetische Schicht, die eine äußerst feine Mikrostruktur hat. Da außerdem die Entmagnetisierung nicht die Speicherfähigkeit begrenzt, besteht deswegen keine Notwendigkeit, möglichst dünne Medien zur hochdichten longitudinalen Speicherung zu verwenden. Im Falle einer geringeren Schreibtiefe als der Schichtdicke, die bei hoher Schreibdichte auftritt, wirkt der nicht beschriebene Teil der Magnetschicht aufgrund der reversiblen Permeabilität als magnetischer Rückschluß. Der magnetische Rückschluß ist ebenfalls durch die hohe Reversibilität gekennzeichnet, was bedeutet, daß sich das erfindungsgemäße Medium bei einer begrenzten Schreibtiefe nicht vollständig entmagnetisieren wird, weil ein magnetischer Rückschluß durch den nichtaufmagnetisierten Teil der Magnetschicht bewerkstelligt werden kann. Im Falle der Senkrechtaufzeichnung wirkt der nicht beschriebene Teile automatisch ähnlich wie eine weichmagnetische Unterschicht bei einem konventionell aufgebauten magnetischen Aufzeichnungsträger.

6) Für Mikrowellenabsorber

Ein ferro- oder ferrimagnetischer Werkstoff absorbiert aufgrund der ferromagnetischen Remanenz Mikrowellen. Diese Absorption hängt im Fall von eindomänigen Teilchen von der Stärke der Anisotropiefeldstärke ab. Für Anwendungen im technisch interessanten Bereich (beispielsweise Abschirmung eines Mikrowellenherdes) müssen Anisotropiefeldstärken von etwa 80 kA/m vorliegen. Eine Möglichkeit, eine solche Absorption zu realisieren, ist demnach die Herstellung von magnetischen Eindomänenteilchen mit einer Anisotropiefeldstärke von ca. 80 kA/m. Um eine breitbandige Wirkung zu erzielen, ist jedoch gemäß dem Stand der Technik eine breite Verteilung der Anisotropiefeldstärken erforderlich.

In Mehrdomänenteilchen ist jedoch auch eine Resonanz der Domänenwände möglich. Diese Resonanzfrequenzen liegen bei weitaus geringeren Frequenzen, typischerweise im MHz-Bereich. Da in einem Austauschfeder-Magneten jedoch nur Bruchstücke von Domänenwänden vorliegen, sind zum einen die Resonanzfrequenzen deutlich höher als bei kompletten Domänenwänden, zum anderen liegen jedoch Domänenwandstücke stark unterschiedlicher Größe vor. Der Grund dafür ist darin zu sehen, daß die Winkel zwischen den leichten Achsen in den hartmagnetischen Bereichen durch die Magnetisierung in der weichmagnetischen Phase überbrückt werden. Da die Stellungen der hartmagnetischen Vorzugsachsen unterschiedlich zueinander sind, entstehen Domänenwandstücke unterschiedlicher Größe, die unterschiedliche Eigenfrequenzen haben. Auf diese Weise wird ein breitbandiger Mikrowellenabsorber erhalten. Das magnetische Material kann dabei in einer Kunststoffmasse eingebettet sein.

## Patentansprüche

1. Magnetisierbares Material, das aus wenigstens zwei ferro- und/oder ferrimagnetischen Phasen besteht, welche durch magnetische Austauschkopplung untereinander magnetisch gekoppelt sind, wobei mindestens eine der Phasen hartmagnetisch und mindestens eine der Phasen weichmagnetisch ist, wobei der Volumenanteil der weichmagnetischen Phase mindestens 30 % ist, wobei die Orientierung der hartmagnetischen Phase statistisch in Bezug auf die Hauptrichtungen der weichmagnetischen Phase verteilt ist und wobei das magnetische Material ein isotropes Verhältnis von Sättigungsremanenz zu Sättigungsmagnetisierung von größer als 0,6 besitzt, dadurch gekennzeichnet, daß die weichmagnetische Phase eine kubische Struktur aufweist und daß nach vorhergehender magnetischer Sättigung in einer Richtung bei Anlegen eines entgegengerichteten Feldes, welches gleich der Koerzitivfeldstärke des magnetischen Materials ist, nach Wegnehmen des Feldes mindestens 65 % der ursprünglichen Sättigungsremanenz wieder erreicht werden.

2. Magnetisierbares Material gemäß Anspruch 1, gekennzeichnet durch eine Legierung aus $RE_xFe_yB_zSi_uT_v$, wobei RE = eines oder mehrere Elemente ausgewählt aus seltenen Erden (Ce, Pr, Nd, Sm, Eu, Gd, Tb, Dy, Ho, Er, Tm, Yb, Lu) und/oder Y, Zr und Hf und wobei T = eines oder mehrere Übergangselemente mit kubisch-raumzentrierter Struktur (Cr, Nb, Mo, V) und wobei
x nicht mehr als 10 Atom%
y nicht mehr als 85 Atom%
z nicht mehr als 25 Atom%
u größer Null und nicht mehr als 10 Atom%
v größer Null und nicht mehr als 10 Atom% ist.

3. Magnetisierbares Material nach den Ansprüchen 1 bis 2, dadurch gekennzeichnet, daß die hartmagnetische Phase und/oder die weichmagnetische Phase aus jeweils mindestens zwei Teilphasen besteht.

4. Magnetisierbares Material nach Anspruch 2, dadurch gekennzeichnet, daß die weichmagnetische Phase aus den Teilphasen $\alpha$-Fe sowie $Fe_3B$ besteht und daß die hartmagnetische Phase die Zusammensetzung $Nd_2Fe_{14}B$ hat.

5. Magnetisierbares Material nach Anspruch 2, dadurch gekennzeichnet, daß die weichmagnetische Phase aus den Teilphasen $Fe_{23}B_6$ und $Fe_3B$ besteht und daß die hartmagnetische Phase die Zusammensetzung $Nd_2Fe_{14}B$ hat.

6. Verfahren zur Herstellung eines magnetischen Aufzeichnungsträgers mit einem Material gemäß den Ansprüchen 1 und 2, dadurch gekennzeichnet, daß das magnetisierbare Material in einer Feindispergiereinrichtung zu der gewünschten Korngröße feingemahlen, anschließend durch Tempern im Bereich von 670 - 780°C zu dem gewünschten Verhältnis von hartmagnetischer zu weichmagnetischer Phase gebracht wird und daß die so entstandenen magnetisierbaren Pigmente zusammen mit polymerem Bindemittel auf einen Schichtträger durch eine Gießvorrichtung ohne nachfolgende magnetische Ausrichtung der Pigmente aufgebracht werden.

7. Verfahren zur Herstellung eines magnetischen Aufzeichnungsträgers mit einem Material gemäß den Ansprüchen 1 und 2, dadurch gekennzeichnet, daß eine Legierung, bestehend aus RE, Fe, B, T und Si, dessen stöchiometrisches Verhältnis die Zusammensetzung des Endprodukts bestimmt, durch Aufdampfen im Vakuum auf einen Schichtträger aufgebracht wird, worauf durch Tempern der Schicht das gewünschte Verhältnis von hart- zu weichmagnetischer Phase eingestellt wird.

8. Verfahren zur Herstellung eines magnetischen Aufzeichnungsträgers mit einem Material gemäß den Ansprüchen 1 und 2, dadurch gekennzeichnet, daß eine Zusammensetzung, bestehend aus RE, Fe, B, T und Si, dessen stöchiometrisches Verhältnis die Zusammensetzung des Endprodukts bestimmt, durch Sputtern auf einen Schichtträger aufgebracht wird, worauf durch Tempern der Schicht das gewünschte Verhältnis von hart- zu weichmagnetischer Phase eingestellt wird.

9. Verfahren zur Herstellung eines magnetischen Aufzeichnungsträgers mit einem Material gemäß den Ansprüchen 1 und 2, dadurch gekennzeichnet, daß eine Zusammensetzung, bestehend aus RE, Fe, B, T und Si, durch deren stöchiometrisches Verhältnis die Zusammensetzung des Endprodukts einstellbar ist, durch Sputtern oder Aufdampfen auf einen Schichtträger aufgebracht wird, worauf die Schichtoberfläche kurzzeitig rasterförmig oder großflächig mit einem Laserstrahl oder einem Elektronenstrahl behandelt wird.

10. Magnetischer Aufzeichnungsträger resultierend aus den Verfahren gemäß der Ansprüche 6-9, dadurch gekennzeichnet, daß der Schichtträger eine Festplatte, eine Diskette oder ein bandförmiger Träger ist.

**11.** Magnetischer Aufzeichnungsträger nach dem Anspruch 10, dadurch gekennzeichnet, daß RE = Ce ist und daß der Aufzeichnungsträger als thermomagnetisches Duplikationsmaterial verwendet wird.

**12.** Absorber für Mikrowellen, dadurch gekennzeichnet, daß der Absorber ein magnetisierbares Material gemäß den Ansprüchen 1 bis 5 enthält.

## Claims

1. A magnetizable material which consists of at least two ferromagnetic and/or ferrimagnetic phases which are magnetically coupled to one another by magnetic exchange coupling, at least one of the phases being magnetically hard and at least one of the phases being magnetically soft, the volume fraction of the magnetically soft phase being at least 30%, the orientation of the magnetically hard phase being randomly distributed with respect to the main directions of the magnetically soft phase and the magnetic material having an isotropic ratio of residual induction to saturation magnetization of more than 0.6, wherein the magnetically soft phase has a cubic structure and wherein, after prior magnetic saturation in one direction, on application of a field in the opposite direction which is equal to the coercive force of the magnetic material at least 65% of the original residual induction is reached again after the field is removed.

2. A magnetizable material as claimed in claim 1, comprising an alloy of $RE_xFe_ySi_uT_v$, where RE is one or more elements selected from rare earths (Ce, Pr, Nd, Sm, Eu, Gd, Tb, Dy, Ho, Er, Tm, Yb or Lu) or Y, Zr or Hf, T is one or more transition elements having a space centered cubic structure (Cr, Nb, Mo, V) and
   x is not more than 10 atom%,
   y is not more than 85 atom%,
   z is not more than 25 atom%,
   u is greater than zero and not more than 10 atom% and
   v is greater than zero and not more than 10 atom%.

3. A magnetizable material as claimed in claim 1 or 2, wherein the magnetically hard phase and/or the magnetically soft phase each consist of at least two part-phases.

4. A magnetizable material as claimed in claim 2, wherein the magnetically soft phase consists of the part-phases $\alpha$-Fe and $Fe_3B$ and the magnetically hard phase has the composition $Nd_2Fe_{14}B$.

5. A magnetizable material as claimed in claim 2, wherein the magnetically soft phase consists of the part-phases $Fe_{23}B_6$ and $Fe_3B$ and the magnetically hard phase has the composition $Nd_2Fe_{14}B$.

6. A process for the preparation of a magnetic recording medium having a material as claimed in claim 1 or 2, wherein the magnetizable material is finely milled in a fine dispersing apparatus to the desired particle size, then brought to the desired ratio of magnetically hard to magnetically soft phase by heating at 670-780°C and the resulting magnetizable pigments are applied, together with a polymeric binder, to a substrate by means of a casting apparatus without subsequent magnetic orientation of the pigments.

7. A process for the preparation of a magnetic recording medium having a material as claimed in claim 1 or 2, wherein an alloy which consists of RE, Fe, B, T and Si and whose stoichiometric ratio determines the composition of the end product is applied to a substrate by vapor deposition under reduced pressure, after which the desired ratio of magnetically hard to magnetically soft phase is established by heating the layer.

8. A process for the preparation of a magnetic recording medium having a material as claimed in claim 1 or 2, wherein a composition which consists of RE, Fe, B, T and Si and whose stoichiometric ratio determines the composition of the end product is applied to a substrate by sputtering, after which the desired ratio of magnetically hard to magnetically soft phase is established by heating the layer.

9. A process for the preparation of a magnetic recording medium having a material as claimed in claim 1 or 2, wherein a composition which consists of RE, Fe, B, T and Si and whose stoichiometric ratio determines the composition of the end product is applied to a substrate by sputtering or vapor deposition, after which the substrate surface is treated briefly, in a grid-like manner or over its entire surface, with a laser beam or electron beam.

10. A magnetic recording medium resulting from a process as claimed in any of claims 6 to 9, wherein the substrate is a hard disk, a diskette or a tape-like medium.

11. A magnetic recording medium as claimed in claim 10, wherein RE is Ce and the recording medium is used as a thermomagnetic duplication material.

12. An absorber for microwaves, which comprises a magnetizable material as claimed in any of claims 1 to 5.

**Revendications**

1. Matériau magnétisable qui est constitué d'au moins deux phases ferro- et/ou ferrimagnétique qui sont couplées magnétiquement l'une à l'autre par couplage d'échange, au moins une des phases étant magnétiquement dure et au moins une des phases étant magnétiquement douce, la partie en volumes de la phase magnétiquement douce étant d'au moins 30 %, l'orientation de la phase magnétiquement dure étant distribuée statistiquement par rapport à la direction principale de la phase magnétiquement douce et le matériau magnétique possède un rapport isotrope de rémanence de saturation à magnétisation de saturation supérieur à 0,6, caractérisé par le fait que la phase magnétiquement douce présente une structure cubique et que après saturation magnétique précédente dans une direction par application d'un champ de direction opposée qui est égal à l'intensité de champ coercitif du matériau magnétique, sont atteints de nouveau, après disparition du champ, au moins 65 % de la rémanence de saturation initiale.

2. Matériau magnétisable selon la revendication 1, caractérisé par un alliage de $RE_xFe_yB_zSi_uT_v$, RE étant un ou plusieurs éléments choisis parmi les terres rares (Ce, Pr, Nd, Sm, Eu, Gd, Tb, Dy, Ho, Er, Tm, Yb Lu) et/ou Y, Zr et Hf et T étant un ou plusieurs éléments de transition à structure centrée cubiquement dans l'espace (Cr, Nb, Mo, V) et
x n'étant pas supérieur à 10 atomes %,
y pas supérieur à 85 atomes %,
z pas supérieur à 25 atomes %,
u étant plus grand que zéro et pas supérieur à 10 atomes %,
v étant plus grand que zéro et pas supérieur à 10 atomes %.

3. Matériau magnétisable selon les revendications 1 à 2, caractérisé par le fait que la phase magnétiquement dure et/ou la phase magnétiquement douce sont constituées chacune d'au moins deux phases partielles.

4. Matériau magnétisable selon la revendication 2, caractérisé par le fait que la phase magnétiquement douce est constituée des phases partielles Fe-$\alpha$ et $Fe_3B$ et que la phase magnétiquement dure a la composite $Nd_2Fe_{14}B$.

5. Matériau magnétisable selon la revendication 2, caractérisé par le fait que la phase magnétiquement douce est constituée des phases partielles $Fe_{23}B_6$ et $Fe_3B$ et que la phase magnétiquement dure a la composite $Nd_2Fe_{14}B$.

6. Procédé de fabrication d'un support d'enregistrement magnétique avec un matériau selon la revendication 1 et 2, caractérisé par le fait que le matériau magnétisable est finement moulu à la grosseur de grains voulue dans un appareil de dispersion fine, est ensuite porté au rapport voulu entre phases magnétiquement dure et magnétiquement douce par chauffage dans une zone de 670-780°C, et que les pigments magnétisables ainsi obtenus, avec des liants polymères, sont appliqués sur une couche de support par un dispositif de coulée, sans alignement magnétique suivant des pigments.

7. Procédé de fabrication d'un support d'enregistrement magnétique avec un matériau selon la revendication 1 et 2, caractérisé par le fait qu'un alliage, constitué de RE, Fe, B, T et Si dont le rapport stoechiométrique détermine la composition du produit final, est appliqué par vaporisation dans le vide sur une couche de support, après quoi la couche est réglée par chauffage au rapport voulu entre les phases magnétiquement dure et douce.

8. Procédé de fabrication d'un support d'enregistrement magnétique avec un matériau selon la revendication 1 et 2, caractérisé par le fait qu'une composition constituée de RE, Fe, B, T et Si dont le rapport stoechiométrique détermine la composition du produit final, est appliquée par projection sur une couche de support, après quoi la couche est réglée par chauffage au rapport voulu entre phases magnétiquement dure et magnétiquement douce.

9. Procédé de fabrication d'un support d'enregistrement magnétique avec un matériau selon la revendication 1 et 2, caractérisé par le fait que une composition, constituée de RE, Fe, B, T et Si par le rapport stoechiométrique de laquelle est réglable la composition du produit final, est appliquée par projection ou vaporisation sur une couche support, après quoi la surface de la couche est traitée pendant un court moment, avec formation d'un réseau ou grande surface, par un faisceau laser ou un faisceau d'électrodes.

10. Support d'enregistrement magnétique résultant du procédé selon la revendications 6 à 9, caractérisé par le fait que la couche de support est une plaque solide, une disquette ou un support en forme de bande.

11. Support d'enregistrement magnétique selon la revendication 10, caractérisé par le fait que RE est Ce et que le support d'enregistrement est utilisé comme matériau de duplication thermomagnétique.

12. Absorbeur pour micro-ondes, caractérisé par le fait que l'absorbeur contient un matériau magnétisable selon les revendications 1 à 5.

FIG. 1

weich    hart    weich    hart    weich

FIG. 2

FIG. 3

17

FIG. 4

Konventioneller Magnet

FIG. 5a

Austauschfeder-Magnet

FIG. 5b

FIG. 6

FIG. 7